# DEMANDE DE BREVET EUROPEEN

(11) **EP 0 666 626 A1**
(43) Date de publication de la demande: **09.08.1995**
(21) Numéro de dépôt: 95400253.1
(22) Date de dépôt: 07.02.1995
(51) Int. Cl.: H02B 1/052

(54) **Appareil électrique à dispositif de fixation rapide, et procédé pour sa dépose**

(30) Priorité: 08.02.1994 FR 9401394
(71) Demandeur: LEGRAND, F-87045 Limoges Cédex (FR); LEGRAND SNC, F-87045 Limoges (FR)
(72) Inventeur: Evrard, Jean Luc, Hameau des Myrtes, 06130 Grasse (FR); Gaymard, Gilles, F-06480 La Colle sur Loup (FR); Le Goaoc, François, Le Haut Sartoux, 06560 Valbonne (FR)
(74) Mandataire: CABINET BONNET-THIRION

(57) **Abrégé**

Il s'agit d'un appareil électrique qui, pour son montage sur un rail de support (10), est équipé, sur sa face arrière (24), d'un dispositif de fixation rapide (22) comportant, en vis-à-vis, deux verrous (29, 30), dont un, au moins, le verrou (29), est monté mobile, suivant une course (C1), entre une position active, de maintien, et une position inactive de libération.

Suivant l'invention, et en combinaison, la borne de connexion (25) est une borne de connexion de type "ascenseur" mettant en oeuvre, de manière connue en soi, un organe de contact (48) fixe et un organe de serrage (50), qui, monté mobile sous le contrôle d'un organe de commande (51), est disposé du côté de l'organe de contact (48) tourné vers la face arrière (24), et la face arrière (24) présentant une encoche (27) par laquelle l'appareil électrique peut être engagé sur le rail de support (10) et dans laquelle intervient le dispositif de fixation rapide (22), la course (C2) de l'organe de serrage (50) de la borne de connexion (25), mesurée perpendiculairement à la face arrière (24), est au moins égale à la profondeur (P2) de l'encoche (27) mesurée dans les mêmes conditions.

Application, notamment, aux appareils électriques modulaires.

## Description

La présente invention concerne d'une manière générale les appareils électriques du genre comportant, pour leur montage sur un rail de support, un dispositif de fixation rapide, qui est implanté sur leur face arrière, dûment aménagée à cet effet, et qui comporte, lui-même, en vis-à-vis, deux verrous, dont l'un au moins, communément appelé "talon", mais dit ci-après par simple commodité verrou de démontage, est monté mobile entre deux positions stables, l'une, active, de maintien, pour laquelle il est relativement rapproché de l'autre verrou, communément appelé "griffe", mais dit ci-après par simple commodité verrou de montage, pour le serrage de l'ensemble sur le rail de support, l'autre, inactive, de libération, pour laquelle, au contraire, il est relativement écarté du verrou de montage, pour permettre à l'ensemble de pouvoir échapper au rail de support.

Elle vise plus particulièrement, mais non nécessairement exclusivement, le cas des appareils électriques modulaires à disposer jointivement côte à côte sur un même rail de support.

Un appareil électrique de ce genre et équipé d'un dispositif de fixation rapide se trouve notamment décrit dans le brevet français qui, déposé le 19 septembre 1989 sous le No 89 12277, a été publié sous le No 2 652 205.

Pour son raccordement à au moins un conducteur électrique, et, notamment, à un conducteur électrique d'alimentation, un tel appareil électrique comporte au moins une borne de connexion, qui, en pratique, ouvre sur une de ses faces latérales.

En pratique, également, la portion d'attaque, au moins, ou nez, du verrou de montage, c'est-à-dire la portion de ce verrou par laquelle celui-ci est apte à venir en prise avec le rail de support, est élastiquement effaçable, cette portion d'attaque étant par exemple soumise à des moyens élastiques qui la sollicitent en permanence en direction du verrou de démontage, ce qui, ce verrou de démontage étant en position active, permet une pose de l'appareil électrique sur le rail de support par simple encliquetage, sans intervention sur ce verrou de démontage.

Pour la dépose d'un appareil électrique isolé, il suffit également d'intervenir en conséquence sur le verrou de montage, celui-ci comportant usuellement une portion de queue permettant de provoquer un retrait suffisant de sa portion d'attaque pour qu'une telle dépose soit effectivement possible.

Le verrou de démontage trouve son application lorsque, plusieurs appareils électriques étant disposés sur un même rail de support, un même conducteur électrique, formant barre bus, et en forme de peigne, en assure conjointement l'alimentation, en étant en prise par des pattes avec chacun d'eux, et que, sans intervention sur ce conducteur électrique, il est nécessaire d'assurer la dépose d'un seul des appareils électriques.

Il suffit en effet de faire alors passer ce verrou de démontage de sa position active à sa position inactive pour conférer à l'appareil électrique une capacité suffisante de déplacement par rapport au rail de support pour qu'il puisse être dégagé de la patte du conducteur électrique avec laquelle il était jusqu'alors en prise.

Cette disposition donne satisfaction.

Mais elle a pour inconvénient que la course du verrou de démontage entre sa position active et sa position inactive doit nécessairement être au moins égale à la longueur des pattes du conducteur électrique formant barre bus.

Il en résulte inévitablement une emprise relativement importante du verrou de démontage sur l'ensemble, au détriment de la place disponible.

La présente invention a d'une manière générale pour objet une disposition permettant d'éviter cet inconvénient, en limitant la course du verrou de démontage.

Elle est fondée sur l'observation que, par un choix judicieux de celle au moins des bornes de connexion qui est située du côté du verrou de démontage, il est possible de tirer parti de cette borne de connexion pour assurer suivant un processus particulier la dépose recherchée.

Globalement, les bornes de connexion susceptibles d'équiper les appareils électriques du genre en cause mettent usuellement en oeuvre un organe de contact fixe et un organe de serrage monté mobile sous le contrôle d'un organe de commande, en pratique une vis, cet organe de commande engrenant avec une cage tubulaire, communément appelée étrier, qui s'étend autour de l'organe de contact et de l'organe de serrage, et qui, à l'une de ses extrémités, forme le débouché dans lequel doit être engagé le conducteur électrique à raccorder.

Mais elles sont de deux types.

Dans un premier cas, la cage est fixe, et l'organe de serrage, entraîné par l'organe de commande, est disposé du côté de l'organe de contact tourné vers la face avant de l'appareil électrique.

Dans le deuxième cas, la cage est mobile, et l'organe de serrage est disposé du côté de l'organe de contact tourné vers la face arrière de l'appareil électrique.

C'est ce deuxième type de borne de connexion, communément appelée borne "ascenseur", qui est systématiquement mis en oeuvre suivant l'invention du côté du verrou de démontage.

La présente invention a ainsi tout d'abord pour objet un appareil électrique du genre comportant, d'une part, pour son montage sur un rail de support, un dispositif de fixation rapide, qui est implanté sur sa face arrière, et, d'autre part, pour son raccordement à au moins un conducteur électrique, au moins une borne de connexion, qui ouvre sur une de ses faces latérales, le dispositif de fixation rapide comportant, lui-même, en vis-à-vis, deux verrous, dont l'un, au moins, dit ici par simple commodité verrou de démontage, est monté mobile entre deux positions stables, l'une active, de maintien, pour laquelle il est relativement rapproché de l'autre verrou, dit ici par simple commodité verrou de montage, l'autre, inactive, de libération, pour laquelle il est au contraire relativement écarté de ce verrou de montage, cet appareil électrique étant d'une manière générale caractérisé en ce que, en combinaison, d'une part, la borne de connexion met en oeuvre, de manière connue en soi, un organe de contact fixe et un organe de serrage, qui, monté mobile sous le contrôle d'un organe de commande, est disposé du côté de l'organe de contact tourné vers la face arrière, et, d'autre part, la face arrière présentant une encoche par laquelle l'appareil électrique peut être engagé sur le rail de support et dans laquelle intervient le dispositif de fixation rapide, la course de l'organe de serrage de la borne de connexion, mesurée perpendiculairement à la face arrière, est au moins égale à la profondeur de cette encoche mesurée dans les mêmes conditions.

La borne de connexion étant suivant l'invention une borne "ascenseur", il suffit de procéder à son desserrage pour permettre la dépose de l'appareil électrique si, corollairement, le verrou de démontage est en position inactive.

En effet, lorsque, conjointement, la borne de connexion est ainsi desserrée et que le verrou de démontage est en position inactive, l'appareil électrique bénéficie d'une capacité de déplacement par rapport à la patte du conducteur électrique perpendiculairement à cette patte, puisque l'organe de serrage de la borne de connexion, alors écarté de l'organe de contact, libère cette patte, en lui laissant du champ libre entre l'organe de contact et lui.

L'appareil électrique pouvant ainsi être dégagé du rail de support perpendiculairement à celui-ci, il suffit ensuite de le déplacer parallèlement à ce rail de support pour qu'il puisse être dégagé de la patte du conducteur électrique.

De ce point de vue, la présente invention a encore pour objet le procédé de dépose correspondant, qui peut être mis en oeuvre alors même que, sans précaution de pose particulière, l'appareil électrique est en prise par sa borne de connexion avec un conducteur électrique formant barre bus, sur lequel il n'est pas possible d'intervenir, et dont une patte, perpendiculaire à une longrine, est serrée entre l'organe de contact de la borne de connexion et l'organe de serrage de celle-ci, même si, par sa longrine, le conducteur électrique est plaqué sans jeu contre la face latérale correspondante de l'appareil électrique, et/ou si, par l'extrémité de sa patte, ce conducteur électrique est en butée contre la paroi correspondante de la cavité dans laquelle cette patte est engagée.

Ce procédé de dépose est caractérisé en ce que, le verrou de démontage et le verrou de montage étant amenés en position inactive, et la borne de connexion étant desserrée, l'appareil électrique est, comme déjà exposé ci-dessus, dégagé du rail de support, perpendiculairement à celui-ci, jusqu'à butée de l'organe de serrage de la borne de connexion contre la patte du conducteur électrique, puis déplacé parallèlement au rail de support, jusqu'à son dégagement de la patte du conducteur électrique.

Corollairement, la course du verrou de démontage entre sa position active et sa position inactive peut, avantageusement, suivant l'invention, être inférieure à la profondeur de la borne de connexion, en se limitant, en pratique, à celle strictement nécessaire pour que, en position inactive, ce verrou de démontage échappe au rail de support, et tout en pouvant cependant être légèrement supérieure à celle-ci par mesure de sécurité.

Elle est en tout cas avantageusement réduite, au bénéfice de l'emprise du verrou de démontage sur l'ensemble, et, donc, au bénéfice de la place nécessaire à son implantation.

Certes, dans les demandes de brevet européen No 0 327 385 et 0 359 677, il est déjà prévu de mettre en oeuvre une borne de connexion de type "ascenseur".

Mais, dans la demande de brevet européen No 0 327 385, il n'est prévu qu'un seul verrou.

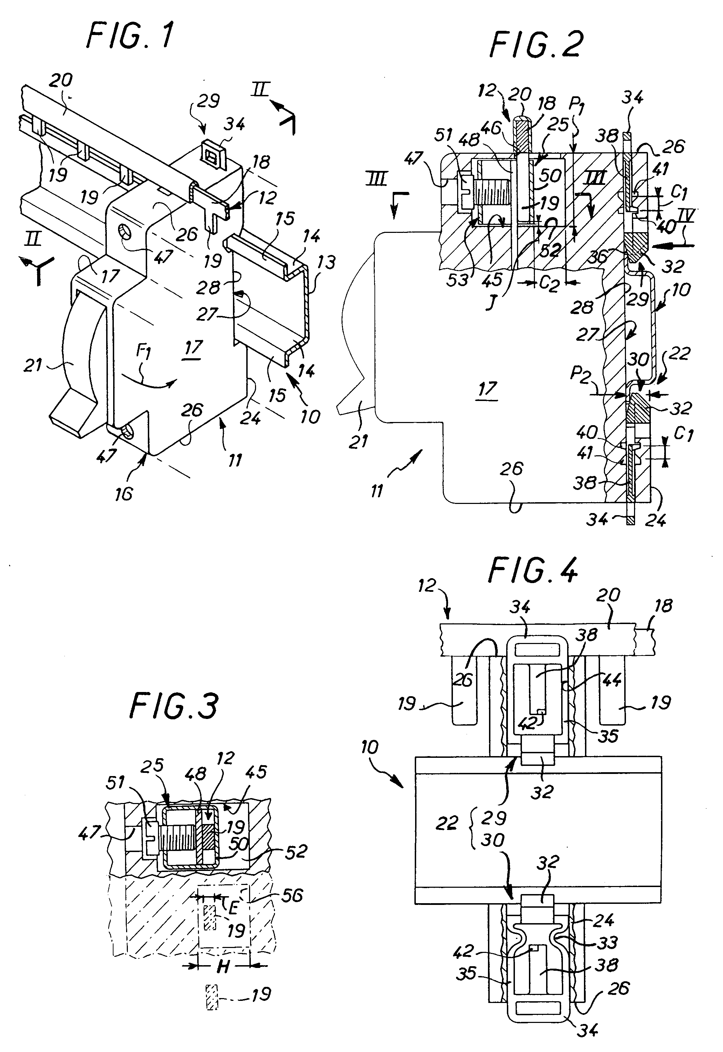

En outre, il ressort clairement de sa figure 3 que la patte du conducteur électrique avec laquelle est en prise la borne de connexion de l'appareil électrique concerné n'est pas engagée à fond dans cette borne de connexion.

Il subsiste donc à ce niveau une course libre, qui permet de dégager cet appareil électrique de son rail de support, en le sortant en biais, et qui, en pratique, est prédéterminée par le constructeur, car le conducteur électrique, et, donc, sa patte, se trouvent solidaires du rail de support.

De même, dans la demande de brevet européen No 0 359 677, il n'est prévu qu'un seul verrou, et, en aucun cas, la patte ou languette du conducteur électrique ne peut être engagée à fond dans la borne de connexion de l'appareil électrique concerné, un jeu J, dûment repéré à la figure 1, étant au contraire nécessaire entre ce conducteur électrique et cet appareil électrique pour permettre le dégagement en biais de ce dernier de son rail de support.

Comme précédemment, ce jeu J est prédéterminé par le constructeur, dans la mesure, au moins, où il dépend de la forme de la gaine isolante dans laquelle se trouvent maintenus le ou les conducteurs électriques correspondants.

Ainsi, dans l'un et l'autre cas, des conditions particulières sont à respecter à la pose.

Il n'en est pas de même avec l'appareil électrique suivant l'invention, dont la pose peut au contraire se faire avantageusement sans précaution particulière, comme déjà précédemment exposé.

En outre, la dépose de l'appareil électrique suivant l'invention n'implique pas sa mise en biais, alors même que, de manière avantageuse, la longrine du conducteur électrique peut éventuellement être plaquée sans jeu contre sa face latérale correspondante, et/ou que la patte de ce conducteur électrique en prise avec la borne de connexion peut elle-même être éventuellement en butée contre la paroi correspondante de la cavité dans laquelle elle est engagée.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un appareil électrique suivant l'invention, représenté en place sur un rail de support et en prise avec un conducteur électrique formant barre bus ;
la figure 2 est une vue de l'ensemble partie en élévation et partie en coupe suivant la ligne II-II de la figure 1 ;
la figure 3 en est une vue partielle en coupe suivant la ligne III-III de la figure 2 ;
la figure 4 en est une vue de l'arrière, suivant la flèche IV de la figure 2 ;
les figures 5A, 5B, 5C sont des vues qui, reprenant celle de la figure 2, illustrent diverses phases successives de la dépose de l'appareil électrique suivant l'invention.

Tel qu'illustré sur ces figures, il s'agit, globalement, de rapporter sur un rail de support 10 un quelconque appareil électrique 11 et d'en permettre la dépose alors même qu'il est en prise avec un conducteur électrique 12, formant barre bus, qui en assure par exemple l'alimentation, et sur lequel il n'est pas possible d'intervenir.

En pratique, le rail de support 10 est du type dit en chapeau ou en oméga : il comporte, en saillie sur une partie médiane 13 propre à sa fixation à un quelconque support, deux ailes latérales 14, qui, de même hauteur, présentent, chacune respectivement, le long de leur bord libre, en directions opposées l'une par rapport à l'autre, des retours en équerre 15.

Tel que représenté en traits continus, à titre d'exemple, sur les figures, l'appareil électrique 11 est un appareil modulaire, c'est-à-dire un appareil dont le corps 16 présente, parallèlement l'une à l'autre, et suivant un écartement multiple d'un module déterminé, deux faces principales 17 par lesquelles il est adapté à être disposé jointivement, côte à côte, avec d'autres appareils modulaires de même type, sur le rail de support 10, transversalement par rapport à celui-ci.

Mais, tel que schématisé en traits interrompus sur les figures 1 et 3, l'invention trouve aussi bien son application lorsque l'appareil électrique 11 est un appareil monobloc, d'extension plus importante que celle d'un simple appareil modulaire.

Le conducteur électrique 12, quant à lui, est en forme de peigne.

Il comporte, parallèlement au rail de support 10, une longrine 18, et, de place en place le long de celle-ci, suivant le pas des appareils électriques 11, des pattes 19, qui, perpendiculaires à la longrine 18, s'étendent en direction du rail de support 10.

Dans la forme de réalisation représentée, la longrine 18 est munie d'un revêtement isolant 20.

L'appareil électrique 11 ne relevant pas par lui-même de la présente invention, il ne sera pas décrit dans tous ses détails ici.

Seuls en seront décrits les éléments nécessaires à la compréhension de l'invention.

Par exemple, et tel que supposé sur les figures, il peut s'agir d'un disjoncteur, ou d'un coupe-circuit, dont on a schématisé en 21 la manette.

Par mesure de simplicité, son corps 16 a été supposé monobloc sur les figures.

Mais il va de soi que, de manière usuelle, il peut par exemple être constitué de deux coquilles dûment affrontées et solidarisées l'une à l'autre, ou d'un corps fermé par un couvercle.

Pour son montage sur le rail de support 10, l'appareil électrique 11 comporte un dispositif de fixation rapide 22, qui est implanté sur sa face arrière 24, et qui sera décrit plus en détail ultérieurement, et, pour son raccordement au conducteur électrique 12, il comporte au moins une borne de connexion 25, qui ouvre sur une de ses faces latérales 26 parallèles au rail de support 10, et qui sera elle-même décrite plus en détail ultérieurement.

En pratique, la face arrière 24 présente, dans sa partie médiane, une encoche 27, à fond 28 plat, par laquelle l'appareil électrique 11 peut être engagé sur le rail de support 10, et dans laquelle intervient le dispositif de fixation rapide 22.

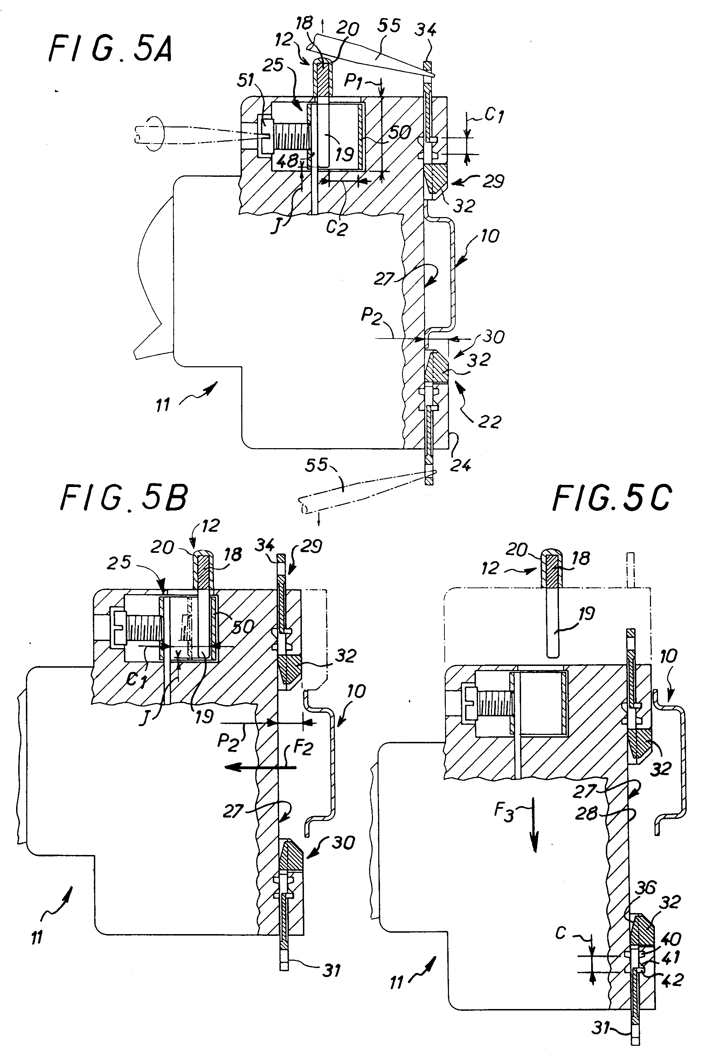

De manière connue en soi, ce dispositif de fixation rapide 22 comporte, lui-même, en vis-à-vis, deux verrous 29, 30, qui s'étendent en direction l'un de l'autre au ras du fond 28 de l'encoche 27, et dont un, au moins, en l'espèce le verrou 29, dit ici par simple commodité verrou de démontage, est monté mobile, transversalement par rapport au rail de support 10, entre deux positions stables, l'une, active, de maintien, figures 2 et 4, pour laquelle il est relativement rapproché de l'autre verrou, en l'espèce le verrou 30, dit ici par simple commodité verrou de montage, pour le serrage de l'ensemble sur le rail de support 10, l'autre, inactive, de libération, figures 5A, 5B et 5C, pour laquelle il est au contraire relativement écarté du verrou 30 de montage, pour permettre à l'ensemble de pouvoir échapper au rail de support 10.

Dans la forme de réalisation représentée, le verrou 30 de montage est du type de celui décrit dans le brevet français qui, déposé le 5 septembre 1990 sous le No 90 11016, a été publié sous le No 2 666 482.

Ce verrou 30 de montage ne sera donc que succinctement décrit ici.

Sa portion d'attaque 32, au moins, ou nez, c'est-à-dire la portion par laquelle il est apte à venir en prise avec le rail de support 10, est élastiquement effaçable, cette portion d'attaque 32 étant soumise à des moyens élastiques 33 qui la sollicitent en permanence en direction du verrou 29 de démontage.

En pratique, la portion d'attaque 32 est reliée à une portion de queue 34 par deux bras latéraux 35 qui, par une déformation locale en forme de demi-onde, constituent les moyens élastiques 33.

Du côté du fond 28 de l'encoche 27, la portion d'attaque 32 est biseautée par un chanfrein 36, pour faciliter son engagement sur le retour en équerre 15 correspondant du rail de support 10 et solliciter celui-ci en application contre ce fond 28.

En pratique, le verrou 30 de montage est lui aussi monté mobile, de manière stable, entre une position active, figures 2 et 4, et une position inactive, figures 5A, 5B et 5C, transversalement par rapport au rail de support 10.

Il comporte, pour ce faire, une poutre de torsion 38, qui, portée par sa portion de queue 34, s'étend parallèlement à ses bras latéraux 35, et qui, pour coopération en indexation avec des crans 40, 41 prévus à cet effet dans le corps 16 même de l'appareil électrique 11, présente, en saillie, de manière diagonalement opposée de l'une de ses faces à l'autre, des ergots 42.

Soit C1 la course de ce verrou 30 de montage entre sa position active et sa position inactive, définie par la distance séparant l'un de l'autre les crans 40, 41 du corps 16.

Dans la forme de réalisation représentée, le verrou 29 de démontage a une constitution globalement analogue à celle du verrou 30 de montage.

Comme ce dernier, il comporte donc une portion d'attaque 32, à chanfrein 36, deux bras latéraux 35, une portion de queue 34, et, pour son indexation en coopération avec des crans 40, 41 du corps 16, une poutre de torsion 38 à ergots 42.

Mais, dans la forme de réalisation représentée, et à la différence du verrou 30 de montage, ses bras latéraux 35 relient rigidement sa portion d'attaque 32 à sa portion de queue 34, sans déformation locale leur conférant une quelconque élasticité.

Sa course C1 entre sa position active et sa position inactive, définie comme précédemment par la distance séparant l'un de l'autre les crans 40, 41 correspondants du corps 16, est égale à celle, C1, du verrou 30 de montage.

Les verrous 29, 30 ainsi constitués sont globalement dans l'alignement l'un de l'autre, en étant chacun montés mobiles dans une rainure 44 du corps 16 propre à en assurer conjointement, d'une part, le guidage parallèlement au fond 28 de l'encoche 27, et, d'autre part, la retenue, perpendiculairement à ce fond 28.

Pour leur commande, c'est-à-dire pour leur passage de la position active à la position inactive, leur portion de queue 34 fait saillie hors du corps 16, sur les faces latérales 26 de l'appareil électrique 11.

Les verrous 29, 30 sont interchangeables.

Mais, en pratique, le verrou 29 de démontage intervient préférentiellement du côté amont de l'appareil électrique 11, c'est-à-dire du côté de celui-ci suivant lequel se fait son alimentation, et, donc, du côté où intervient le conducteur électrique 12 prévu à cet effet.

Lorsque, comme représenté, l'appareil électrique 11 est disposé verticalement, ce côté amont correspond à la face latérale 26 supérieure.

Corollairement, le verrou 30 de montage intervient du côté aval de l'appareil électrique 11, et, donc, du côté de la face latérale 26 inférieure de celui-ci.

Il ressort de ce qui précède que la borne de connexion 25 intervient du côté du verrou 29 de démontage.

Dans la forme de réalisation représentée, cette borne de connexion 25 est disposée à l'intérieur d'une cavité 45, qui, ménagée à cet effet dans le corps 16, au voisinage de la face latérale 26 supérieure de celui-ci, parallèlement à cette face latérale 26 supérieure, débouche par une ouverture 46 sur celle-ci.

Pour des raisons qui apparaîtront ci-après, la cavité 45 débouche également en façade par une ouverture 47.

Bien entendu, l'appareil électrique 11 comporte une deuxième borne de connexion, qui ouvre sur sa face latérale 26 inférieure, et qui, en pratique est de constitution analogue à celle de la borne de connexion 25.

Cette deuxième borne de connexion n'est pas visible sur les figures.

Seule apparaît à la figure 1 l'ouverture 47 correspondante.

Suivant l'invention, et en combinaison, d'une part, la borne de connexion 25 met en oeuvre, de manière connue en soi, un organe de contact 48 fixe et un organe de serrage 50, qui, monté mobile sous le contrôle d'un organe de commande 51, est disposé du côté de l'organe de contact 48 tourné vers la face arrière 24, entre cet organe de contact 48 et cette face arrière 24, et, d'autre part la course C2 de l'organe de serrage 50 de la borne de connexion 25 dans la cavité 45, mesurée perpendiculairement à la face arrière 24 de l'appareil électrique 11 est au moins égale à la profondeur P2 de l'encoche 27 de l'appareil électrique 11 mesurée dans les mêmes conditions, c'est-à-dire mesurée perpendiculairement à la face arrière 24.

En pratique, cette profondeur P2 est appréciée à compter de la face arrière 24.

Corollairement, la course C1 du verrou 29 de démontage entre sa position active et sa position inactive est préférentiellement inférieure à la profondeur P1 de la borne de connexion 25 mesurée parallèlement à la face arrière 24.

Par profondeur P1 pour la borne de connexion 25 on entend ici la distance suivant laquelle une patte 19 du conducteur électrique 12 est susceptible de s'engager dans l'appareil électrique 11.

Dans la forme de réalisation représentée, cette profondeur P1 est donc appréciée à compter de la face latérale 26 supérieure de l'appareil électrique 11 jusqu'à la paroi 52 de la cavité 45 parallèle à cette face latérale 26 supérieure.

Dans la forme de réalisation représentée, et de manière connue en soi, l'organe de contact 48 se présente sous la forme d'une plaquette qui, tenue rigidement dans le corps 16, s'étend sensiblement à mi-hauteur dans la cavité 45, sur toute la profondeur, ou largeur, de celle-ci, parallèlement à la face arrière 24.

Conjointement, l'organe de serrage 50 appartient à une cage 53 tubulaire, qui, de section transversale globalement quadrangulaire, entoure l'organe de contact 48 et la patte 19 du conducteur électrique 12, tout en étant susceptible de se débattre en hauteur dans la cavité 45 sous le contrôle de l'organe de commande 51.

De manière connue en soi, enfin, cet organe de commande 51 est une vis qui engrène avec la cage 53 du côté de celle-ci opposé à l'organe de serrage 50 par rapport à l'organe de contact 48, et qui est accessible en façade par l'ouverture 47 de la cavité 45.

Les dispositions correspondantes, qui correspondent à une borne de connexion communément appelée "ascenseur", sont bien connues par elles-mêmes, et elles ne seront donc pas décrites plus en détail ici.

Pour la pose de l'appareil électrique 11 sur le rail de support 10, c'est-à-dire pour son montage sur ce rail de support 10, il peut par exemple être procédé comme suit.

L'un et l'autre des verrous 29, 30 étant en position active, l'appareil électrique 11 est engagé de biais sur le retour en équerre 15 supérieur du rail de support 10 par la portion d'attaque 32 du verrou 29 de démontage, et, par pivotement autour de l'arête de ce retour en équerre 15, il est rabattu sur le rail de support 10, suivant la flèche F1 de la figure 1.

Au passage du retour en équerre 15 inférieur du rail de support 10, la portion d'attaque 32 du verrou 30 de montage s'efface élastiquement, jusqu'à venir se prendre élastiquement sous ce retour en équerre 15, tel que représenté à la figure 2.

Une fois l'appareil électrique 11 ainsi en place sur le rail de support 10, éventuellement avec d'autres appareils électriques 11 disposés parallèlement à lui, le conducteur électrique 12 est lui-même mis en place, avec serrage de sa patte 19 correspondante entre l'organe de contact 48 et l'organe de serrage 50 de la borne de connexion 25.

En pratique, la mise en place du conducteur électrique 12 peut avantageusement se faire sans précaution particulière.

Dans la forme de réalisation représentée, il a été supposé, à titre d'exemple, qu'elle conduisait le conducteur électrique 12 à se plaquer sans jeu par sa longrine 18 sur la face latérale 26 correspondante de l'appareil électrique 11.

Tel que représenté, un jeu J subsiste alors entre l'extrémité de la patte 19 de ce conducteur électrique 12 et la paroi 52 correspondante de la cavité 45 dans laquelle elle est engagée, c'est-à-dire la paroi 52 de cette cavité 45 parallèle à la face latérale 26 précédente.

Mais une disposition inverse est envisageable, la patte 19 du conducteur électrique 12 venant buter contre la paroi 52, cependant qu'un jeu J intervient entre sa longrine 18 et la face latérale 26.

Toute autre implantation est également envisageable.

Pour la dépose de l'appareil électrique 11 du rail de support 10 sans intervention sur ce conducteur électrique 12, il est procédé, suivant l'invention, comme suit.

Dans un premier temps, figure 5A, le verrou 29 de démontage est amené en position inactive, en agissant par exemple à cet effet sur sa portion de queue 34 à l'aide de la lame 55 d'un tournevis, il est procédé de même pour le verrou 30 de montage, et la borne de connexion 25 est desserrée, de préférence à fond.

Du fait du desserrage de la borne de connexion 25, il se dégage, entre la patte 19 du conducteur électrique 12 et l'organe de serrage 50 de la borne de connexion 25, une course C2, qui, tel que schématisé par la flèche F2 à la figure 5B, est mise à profit pour dégager l'appareil électrique 11 du rail de support 10 perpendiculairement à celui-ci, jusqu'à butée de l'organe de serrage 50 de la borne de connexion 25 contre la patte 19 du conducteur électrique 12.

Compte tenu des valeurs relatives précisées ci-dessus entre la course C2 de l'organe de serrage 50 de la borne de connexion 25 et la profondeur P2 de l'encoche 27 de l'appareil électrique 11, il est alors possible de dégager cet appareil électrique 11 de la patte 19 du conducteur électrique 12, en le déplaçant parallèlement au rail de support 10, suivant la flèche F3 de la figure 5C.

Une remise en place de l'appareil électrique 11 sur le rail de support 10 peut se faire suivant le processus inverse.

Comme précédemment, et pour les mêmes raisons, cette remise en place, ou pose, peut avantageusement se faire sans précaution particulière.

Il résulte par ailleurs de ce qui précède que, suivant l'invention, la course C1 du verrou 29 de démontage entre sa position active et sa position inactive peut avantageusement être réduite.

En pratique, suivant l'invention, elle peut être limitée à celle strictement nécessaire pour que, en position inactive, le verrou 29 de démontage échappe au rail de support 10.

Autrement dit, elle peut être limitée à celle strictement nécessaire pour que, dans cette position inactive, la portion d'attaque 32 de ce verrou 29 de démontage affleure avec le flanc correspondant de l'encoche 27 de l'appareil électrique 11.

Dans la forme de réalisation représentée, et ainsi qu'il est visible sur les figures 5A, 5B et 5C, la portion d'attaque 32 du verrou 29 de démontage est, par mesure de sécurité, légèrement en retrait du flanc correspondant de l'encoche 27 en position inactive.

La course C1 du verrou 29 de démontage est alors légèrement supérieure à celle strictement nécessaire.

Dans le cas où, tel que schématisé en traits interrompus sur les figures 1 et 3, l'appareil électrique 11 a une extension suffisante pour correspondre à -l'emprise de deux ou plusieurs pattes 19 du conducteur électrique 12, sans que cela corresponde pour autant à l'implantation de bornes de connexion 25 sur la face latérale 26 supérieure correspondante de cet appareil électrique 11, il est prévu, sur cette face latérale 26 supérieure, parallèlement à la borne de connexion 25, à distance de celle-ci, au pas des pattes 19 du conducteur électrique 12, soit une cavité 56, tel que schématisé à la figure 3, soit un décrochement laissant à une telle patte 19 la place pour s'étendre.

Dans le cas d'une cavité 56, la hauteur H de cette cavité 56, mesurée perpendiculairement à la face arrière 24 de l'appareil électrique 11, est, suivant l'invention, au moins égale à la profondeur P2 de l'encoche 27 de cet appareil électrique 11, augmentée de l'épaisseur E des pattes 19.

Ainsi, le processus de dépose de l'appareil électrique 11 peut se dérouler comme précédemment décrit.

Bien entendu, la présente invention ne se limite pas aux formes de réalisation décrites et représentées, mais englobe toute variante d'exécution notamment en ce qui concerne la constitution du verrou de montage et/ou du verrou de démontage.

En particulier, le verrou de montage n'est pas forcément mobile.

A la limite, il peut être remplacé par un crochet solidaire du corps de l'appareil électrique ou formé par celui-ci.

Dans ce cas, il suffit, à la dépose, lorsque le verrou de démontage a été placé en position inactive et que la borne de connexion a été desserrée, de dégager momentanément en biais l'appareil électrique.

En variante, si, dans ce qui précède, la portion d'attaque du verrou de "démontage" est reliée rigidement à sa portion de queue, cette portion d'attaque peut tout aussi bien être élastiquement déformable, à la manière de celle du verrou de "montage", en étant soumise à des moyens élastiques qui la sollicitent en permanence en direction de l'autre verrou, et, donc, en direction du verrou de "montage".

Dans ce cas, l'appareil électrique suivant l'invention est équipé de deux verrous de même type, en l'espèce de deux verrous du type du verrou de "montage" précédemment décrit.

Mais sa dépose se fait encore suivant un processus semblable à celui décrit.

## Revendications

1. Appareil électrique du genre comportant, d'une part, pour son montage sur un rail de support (10), un dispositif de fixation rapide (22), qui est implanté sur sa face arrière (24), et, d'autre part, pour son raccordement à au moins un conducteur électrique (12), au moins une borne de connexion (25), qui ouvre sur une de ses faces latérales (26), ledit dispositif de fixation rapide (22) comportant, lui-même, en vis-à-vis, deux verrous (29, 30), dont l'un (29), au moins, dit ici par simple commodité verrou de démontage, est monté mobile entre deux positions stables, l'une, active, de maintien, pour laquelle il est relativement rapproché de l'autre verrou (30), dit ici par simple commodité verrou de montage, l'autre, inactive, de libération, pour laquelle il est au contraire relativement écarté du verrou (30) de montage, caractérisé en ce que, en combinaison, d'une part, la borne de connexion (25) met en oeuvre, de manière connue en soi, un organe de contact (48) fixe et un organe de serrage (50), qui, monté mobile sous le contrôle d'un organe de commande (51), est disposé du côté de l'organe de contact (48) tourné vers la face arrière (24), et, d'autre part, la face arrière (24) présentant une encoche (27) par laquelle l'appareil électrique peut être engagé sur le rail de support (10) et dans laquelle intervient le dispositif de fixation rapide (22), la course (C2) de l'organe de serrage (50) de la borne de connexion (25), mesurée perpendiculairement à la face arrière (24), est au moins égale à la profondeur (P2) de l'encoche (27) mesurée dans les mêmes conditions.

2. Appareil électrique suivant la revendication 1, caractérisé en ce que, une cavité (56), au moins, étant prévue sur la face latérale (26), parallèlement à la borne de connexion (25), à distance de celle-ci, pour l'engagement d'une patte (19) du conducteur électrique (12) lorsque ce conducteur électrique (12) est une barre bus en forme de peigne, la hauteur (H) de cette cavité (56), mesurée perpendiculairement à la face arrière (24), est au moins égale à la profondeur (P2) de l'encoche (27) augmentée de l'épaisseur (E) de ladite patte (19).

3. Appareil électrique suivant l'une quelconque des revendications 1, 2, caractérisé en ce que, la borne de connexion (25) intervenant du côté du verrou (29) de démontage, la course (C1) de ce verrou (29) de démontage entre sa position active et sa position inactive est inférieure à la profondeur (P1) de la borne de connexion (25) mesurée parallèlement à la face arrière (24).

4. Appareil électrique suivant la revendication 3, caractérisé en ce que la course (C1) du verrou (29) de démontage est limitée à celle strictement nécessaire pour que, en position inactive, ce verrou (29) de démontage échappe au rail de support (10), ou est légèrement supérieure à celle-ci.

5. Appareil électrique suivant l'une quelconque des revendications 1 à 4, caractérisé en ce que la portion d'attaque (32), au moins, ou nez, du verrou (30) de montage est élastiquement effaçable, cette portion d'attaque (32) étant soumise à des moyens élastiques qui la sollicitent en permanence en direction du verrou (29) de démontage.

6. Appareil électrique suivant l'une quelconque des revendications 1 à 5, caractérisé en ce que le verrou (30) de montage est lui aussi monté mobile entre une position active et une position inactive.

7. Appareil électrique suivant l'une quelconque des revendications 1 à 6, caractérisé en ce que la portion d'attaque (32) du verrou (29) de démontage est reliée rigidement à sa portion de queue (34).

8. Appareil électrique suivant l'une quelconque des revendications 1 à 6, caractérisé en ce que la portion d'attaque (32) du verrou (29) de démontage est élastiquement déformable, cette portion d'attaque (32) étant soumise à des moyens élastiques qui la sollicitent en permanence en direction du verrou (30) de montage.

9. Procédé pour la dépose d'un appareil électrique suivant l'une quelconque des revendications 1 à 8 alors même que, sans précaution de pose particulière, il est en prise par sa borne de connexion (25) avec un conducteur électrique (12), formant barre bus, sur lequel il n'est pas possible d'intervenir, et dont une patte (19), perpendiculaire à une longrine (18), est serrée entre l'organe de contact (48) de la borne de connexion (25) et l'organe de serrage (50) de celle-ci, même si, par sa longrine (18), le conducteur électrique (12) est plaqué sans jeu contre sa face latérale (26) correspondante, et/ou si, par l'extrémité de sa patte (19) concernée, ce conducteur électrique (12) est en butée contre la paroi (52) correspondante de la cavité (45) dans laquelle est engagée cette patte (19), caractérisé en ce que, le verrou (29) de démontage et le verrou (30) de montage étant amenés en position inactive, et la borne de connexion (25) étant desserrée, l'appareil électrique est dégagé du rail de support (10) perpendiculairement à celui-ci, jusqu'à butée de l'organe de serrage (50) de la borne de connexion (25) contre la patte (19) du conducteur électrique (12), puis déplacé parallèlement au rail de support (10), jusqu'à son dégagement de la patte (19) du conducteur électrique (12).
